# FASCICULE DE BREVET EUROPEEN

(11) **EP 0 939 018 B1**
(45) Date de publication et mention de la délivrance du brevet: **11.08.2004**
(21) Numéro de dépôt: 99400382.0
(22) Date de dépôt: 17.02.1999
(51) Int. Cl.: B61D 45/00, B60P 7/12

(54) **Dispositif de calage automatique de pièces cylindriques ou parallélépipédiques et wagon utilisant un tel dispositif**
Automatische Blockiervorrichtung von walzenförmigen oder quaderförmigen Teilen und Waggon mit solch einer Einrichtung
Device for automatically securing cylindrical or parallelepipedic pieces and railway wagon utilizing such a device

(30) Priorité: 25.02.1998 FR 9802280
(43) Date de publication de la demande: 01.09.1999
(73) Titulaire: SOCIETE NATIONALE DES CHEMINS DE FER FRANCAIS, F-75009 Paris (FR); France Wagons, 75436 Paris Cedex 09 (FR)
(72) Inventeur: Gournet, Francis, 94350 Villiers sur Marne (FR)
(74) Mandataire: Casalonga, Axel

(56) Documents cités:
- WO-A-81/00392
- DE-C- 19 515 437
- FR-A- 2 411 730

## Description

La présente invention concerne un dispositif de calage automatique de pièces cylindriques ou parallélépipédiques, notamment de rouleaux de tôle, pour leur transport, en particulier pour leur transport par fer, et un wagon utilisant un tel dispositif.

Le transport ferroviaire de rouleaux de tôle pose des problèmes d'encombrement, de stabilité, de température et de sécurité. Dans l'art antérieur, il est connu de charger les rouleaux sur des wagons de marchandises à fond plat. Les rouleaux portent sur une de leurs sections planes et non sur leur circonférence de façon à être stables. Ce type de chargement implique une importante perte de place sur le wagon et est donc peu économique pour l'utilisateur.

Il est aussi connu d'utiliser des wagons de marchandises spéciaux, munis de berceaux transversaux. Chaque wagon est muni de plusieurs berceaux. Chaque berceau se compose d'un support et de deux butées de maintien latéral. Le support est constitué de deux plaques rectangulaires inclinées en vis-à-vis, formant un canal à section en V. Une troisième plaque rectangulaire horizontale est parfois disposée entre les deux plaques inclinées et constitue le fond du berceau. Les butées de maintien sont disposées aux extrémités latérales du wagon afin d'éviter que le rouleau ne glisse sur le côté et ne tombe du wagon. Ce dispositif permet de charger un nombre satisfaisant de rouleaux par wagon. Toutefois, il ne permet pas un calage du rouleau dans le sens transversal. En effet, le rouleau peut glisser dans le sens de la largeur du wagon et venir en contact avec les butées de maintien latéral.

Afin de respecter les normes de sécurité ferroviaires, il faut que le wagon soit équilibré, c'est-à-dire que le rapport des masses par roue d'un essieu ne doit pas être supérieur à 1,25/1. Le respect de ce rapport lors du chargement est difficile, car le conducteur de l'engin de manutention ne dispose d'aucun repère précis pour placer le rouleau. La difficulté est encore accrue lorsque deux rouleaux sont chargés côte à côte sur le même berceau. Les deux rouleaux peuvent être de masses différentes et le conducteur de l'engin de manutention, connaissant leurs masses respectives, doit les charger d'une manière assurant l'équilibre des masses. Cette opération nécessite la présence de personnel sur les wagons pour guider le conducteur de l'engin de manutention. Outre le coût important qu'elle entraîne, la présence de personnel sur les wagons pose un problème de sécurité lorsque les rouleaux sont des rouleaux de tôle sortant d'aciérie à haute température, parfois plusieurs centaines de degrés.

Les problèmes à résoudre, pour un chargement satisfaisant, sûr et économique, sont les suivants :
- calage latéral et longitudinal,
- rouleaux de dimensions variables,
- guidage du conducteur de l'engin de manutention,
- absence de personnel sur les wagons,
- nombre satisfaisant de rouleaux par wagon.

Le dispositif décrit dans le brevet français n°94 13650 (SNCF) cale les rouleaux de façon satisfaisante latéralement et longitudinalement. Cela s'applique également au dispositif selon le brevet DE-C1-19 515 437. Toutefois le besion d'améliorer la stabilité des rouleaux est apparu.

La présente invention a pour objet de proposer un dispositif pour le transport de pièces cylindriques ou parallélépipédiques, permettant le chargement d'une ou plusieurs pièces cylindriques ou parallélépipédiques par dispositif et le calage latéral et longitudinal de ces pièces tout en les empêchant de basculer d'un côté ou de l'autre du wagon.

Le dispositif de calage automatique de pièces cylindriques ou parallélépipédiques, notamment de rouleaux de tôle pour leur transport, selon l'invention, comprend un support horizontal comportant deux faces d'appui inclinées, adaptées pour entrer en contact avec la surface cylindrique des pièces dont l'axe est horizontal. Au moins une des faces d'appui comprend une rangée de bras indépendants articulés. Chaque rangée de bras est articulée autour d'un axe horizontal d'articulation. Chaque bras est muni d'un moyen de rappel qui, en l'absence de pièces, le maintien en position haute. Lors du chargement de la pièce, chaque bras qui est au contact de ladite pièce, s'abaisse pour venir au contact d'une butée. La largeur des bras articulés est telle par rapport à la largeur d'une pièce que ladite pièce reste adjacente à au moins un bras en position haute ou à une plaque de maintien lors du transport. Chaque bras comprend au moins une surface latérale supérieure formant un moyen de butée anti-basculement d'une pièce.

Lorsque le dispositif de calage ne comprend qu'une rangée de bras articulés, la face d'appui démunie de bras est avantageusement constituée d'une plaque rectangulaire qui peut être équipée ou non d'un autre moyen permettant le calage transversal des rouleaux.

Le dispositif de calage automatique de pièces peut comprendre deux rangées de bras, une par face d'appui. La précision de calage transversal des pièces dépend de la largeur des bras articulés.

Dans un mode de réalisation de l'invention, chaque bras comprend deux surfaces latérales supérieures parallèles pour empêcher une pièce cylindrique de basculer en la retenant sensiblement au niveau de son centre de gravité, si les sollicitations transversales le nécessitent.

Avantageusement, les bras sont articulés autour d'au moins un axe disposé à leurs extrémités inférieures.

Dans un mode de réalisation de l'invention, le moyen de rappel du bras est constitué par un ressort disposé sous le bras.

Le dispositif peut comprendre au moins une traverse d'axe horizontal, de support des bras en position basse.

Dans un mode de réalisation de l'invention, chaque bras comprend un moyen de guidage entre la position haute et la position basse. Le moyen de guidage peut comprendre au moins une portion de profilé métallique s'étendant à partir d'une face inférieure du bras et perpendiculairement au dit bras. Des surfaces fixes peuvent être prévues pour entrer en contact avec la portion de guidage.

Dans un mode de réalisation de l'invention, chaque bras comprend une portion d'extrémité supérieure repliée pour venir en contact avec une surface horizontale d'une traverse et ainsi supporter la charge éventuelle.

Dans un mode de réalisation de l'invention, on installe une pluralité de dispositifs décrits ci-dessus sur un wagon de marchandises. Le wagon de marchandises est alors apte à transporter de façon économique toutes sortes de pièces de dimensions, de masses et de températures variées, quelles que soient les conditions atmosphériques et dans des conditions de sécurité satisfaisantes, les pièces étant retenues tant en translation qu'en rotation. Le chargement d'un wagon équipé de tels dispositifs s'effectue de manière précise, avec peu de personnel. Un tel dispositif peut également être monté sur un véhicule de transport routier.

L'invention sera mieux comprise à l'étude de la description détaillée d'un mode de réalisation pris à titre nullement limitatif et illustré par les dessins annexés, sur lesquels :
la figure 1 est une vue en coupe longitudinale d'un dispositif selon l'invention;

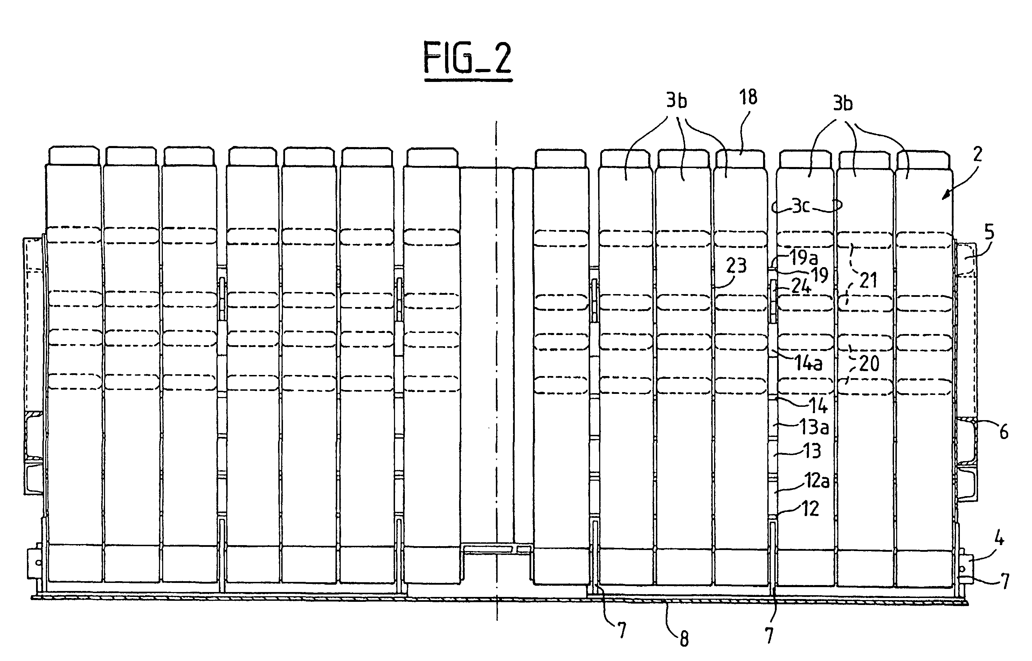

la figure 2 est une vue en coupe transversale selon II-II de la figure 1; et
la figure 3 est une vue en perspective d'un dispositif selon l'invention.

Comme illustré sur les figures, le dispositif de calage automatique selon l'invention est destiné à caler suivant les deux axes horizontaux un rouleau 1. Le rouleau 1 est déposé par un engin de manutention non représenté. Sa circonférence est en contact avec les deux faces d'appui 2 du dispositif. Chaque face d'appui 2 est composée d'une rangée de bras 3 articulés autour d'un axe 4. Les bras 3a sur lesquels le rouleau 1 porte, sont en position basse sous l'effet du poids du rouleau. Les bras 3b ne supportant pas le rouleau restent en position haute sous l'effet d'un moyen de rappel qui sera décrit plus loin.

Chaque bras 3 est constitué d'un tube creux à section rectangulaire et à arêtes arrondies. Les deux axes 4 d'articulation des bras 3 sont parallèles à l'axe du rouleau 1 et situés au centre du dispositif aux extrémités inférieures des bras 3.

Le dispositif est muni de deux plaques 15 fixées aux extrémités latérales de chaque face d'appui 2 de façon à ce qu'un rouleau 1 portant sur le dernier bras d'une rangée de bras 3 ne puisse pas tomber du dispositif par glissement. Les plaques 15 sont renforcées par des bords 5,6. Les plaques de maintien 15 empêchent le rouleau de sortir en-dehors du dispositif.

Les axes 4 d'articulation constitués par exemple de tubes ronds sont supportés par plusieurs, par exemple trois, supports 7 disposés entre deux bras 3 d'articulation adjacents. Les supports 7 d'une rangée de bras 3 sont fixés sur une plaque horizontale 8 de base du dispositif.

Chaque bras 3 indépendant est relié à un ressort oblique 9. Chaque ressort 9 est accroché à une chape 10 fixée au tube constituant le bras 3. L'autre extrémité des ressorts 9 est accrochée sur une traverse 11 solidaire des plaques 15.

Chaque face d'appui 2 comprend trois traverses 12, 13 et 14, réalisées en profilé métallique, d'axe horizontal et disposées sous les bras 3 de façon à supporter les bras 3a en position basse. Les traverses 12, 13 et 14 comprennent des surfaces d'appui supérieures 12a, 13a et 14a prévues pour être en contact avec les bras 3a en leur offrant une surface plane de contact suffisante pour éviter leur déformation. La traverse 12 est disposée en position basse entre l'axe 4 et le ressort 9. La traverse 13 est disposée en position intermédiaire au-dessus du ressort 9 et la traverse 14 est disposée en position supérieure.

Les traverses 12, 13 et 14 sont supportées par une plaque 15 verticale de forme sensiblement triangulaire, dont la base repose sur la plaque de base 8, dont un côté oblique supporte les traverses 12 à 14 et dont le troisième côté constitue une face extérieure du dispositif. La traverse 12 étant disposée à une hauteur relativement faible par rapport à la plaque de base 8, la plaque 15 est suffisamment rigide pour la supporter. Pour les traverses 13 et 14 disposées à une hauteur plus importante, on prévoit des nervures de rigidification 16 et 17 de la plaque 15 qui s'étendent à partir de la plaque de base 8 perpendiculairement à la plaque 15 et perpendiculairement au bras 3a. La nervure 16 est disposée sous la traverse 13 et la nervure 17 est disposée sous la traverse 14.

L'extrémité supérieure des bras 3 comprend une portion repliée vers le bas 18 qui se trouve en position horizontale lorsque le bras est en position basse 3a. La portion repliée 18 est prévue pour venir coopérer avec une traverse supérieure 19 horizontale parallèle aux traverses 12 à 14, et présentant une surface supérieure de contact 19a pour recevoir la portion repliée 18. La traverse 19 est également supportée par la plaque 15 dont le sommet est légèrement tronqué pour fournir une portion de paroi plane 15a de support de la traverse 19.

Le bras 3 comprend des portions de guidage 20 et 21 réalisées en profilé métallique, s'étendant à partir de la face inférieure du bras 3, perpendiculairement audit bras 3 et définissant avec celui-ci un plan vertical. La portion de guidage 20 est prévue pour venir se loger entre les traverses 13 et 14 lorsque le bras est en position basse 3a. La portion de guidage 21 est prévue pour venir se loger entre les traverses 14 et 19 lorsque le bras 3 est dans la position basse 3a.

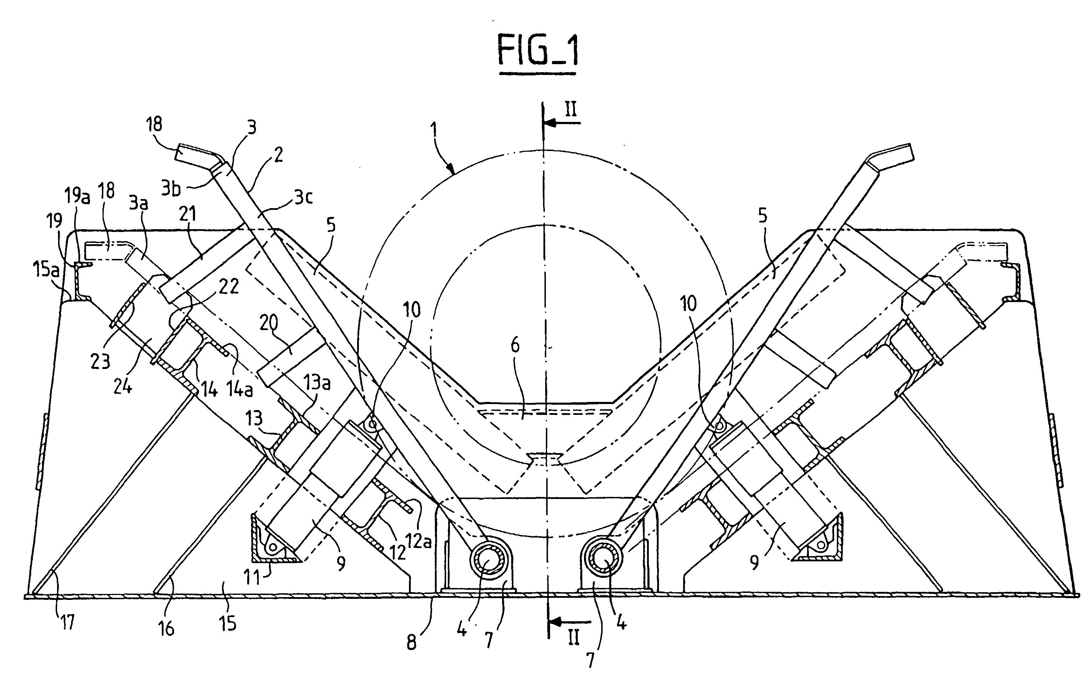

Pour parfaire le guidage de la portion de guidage 21, on rapporte sur la traverse 14 et sur le bord supérieur de la plaque 15 à proximité de la traverse 14, des plaques formant des surfaces de guidage fixes. Une plaque 22 est rapportée directement sur la traverse 14 pour former une surface de contact inférieure. Une plaque 23 est fixée sur la plaque 15 pour former une surface de contact supérieure. La plaque 23 est parallèle à la plaque 22. Deux autres plaques dont une seule référencée 24 est visible sur la figure 1, sont disposées parallèlement entre elles et perpendiculairement aux plaques 22 et 23 et sont fixées à ces dernières et forment ainsi des surfaces de guidage latérales.

On peut prévoir que la plaque 24 s'étende en saillie vers le haut au-delà du plan oblique défini par les surfaces de contact 12a, 13a et 14a des traverses 12, 13 et 14 et vienne ainsi entre deux bras 3a. La portion de guidage 21 du bras 3 peut ainsi être en contact latéral en permanence avec une plaque 24, ce qui garantit un fonctionnement du bras 3 avec un jeu réduit et limite les efforts de torsion et de cisaillement qui peuvent se produire sur l'axe 4 lors de la pose ou de la dépose d'une pièce cylindrique sur une face d'appui 2. Les plaques 22, 23 et 24 forment un canal de guidage latéral de la portion de guidage 21 et du bras 3, la portion de guidage 21 venant en contact avec la plaque 22 lorsque le bras 3 est en position basse 3a.

De plus, le fait que la portion de guidage 21 d'un bras 3b reste au même niveau que la plaque 24 évite l'intrusion de parties de la pièce cylindrique sous un bras 3b directement adjacent à la pièce cylindrique. En effet, lorsque la pièce cylindrique est un rouleau de tôle, l'extrémité libre du feuillard de tôle peut avoir tendance à se dévider et à se mettre légèrement de travers, ce qui peut provoquer son intrusion sous le bras 3b immédiatement adjacent au rouleau de tôle et peut gêner considérablement le déchargement de ce rouleau. La présence des portions de guidage 20 et 21 limite la possibilité de mise en travers de l'extrémité libre du feuillard. La coopération entre la portion de guidage 21 et l'extrémité supérieure de la plaque 24 disposée entre les bras 3a empêche l'extrémité du feuillard de gêner le mouvement des bras 3 et le déchargement du rouleau de tôle.

Chaque bras 3 comprend deux surfaces latérales verticales 3c, parallèles entre elles et parallèles aux surfaces 3c des bras 3 voisins. Le bras 3b adjacent à un rouleau 1 voit une de ses surfaces latérales 3c disposée en regard de la surface verticale d'extrémité du rouleau 1. Le rouleau 1 peut entrer en contact avec cette surface latérale 3c du bras 3b lors d'éventuels déplacements sur le dispositif. La surface latérale 3c sert alors de surface de butée de déplacement transversal du rouleau 1 et de surface de butée anti-basculement du rouleau 1, dans la mesure où la zone de contact entre la surface latérale 3c et la surface verticale d'extrémité du rouleau 1 s'étend relativement haut, sensiblement jusqu'au niveau du centre de gravité du rouleau 1 si les sollicitations transversales le nécessitent, ce qui revient à empêcher tout basculement du rouleau 1 d'un côté ou l'autre du dispositif.

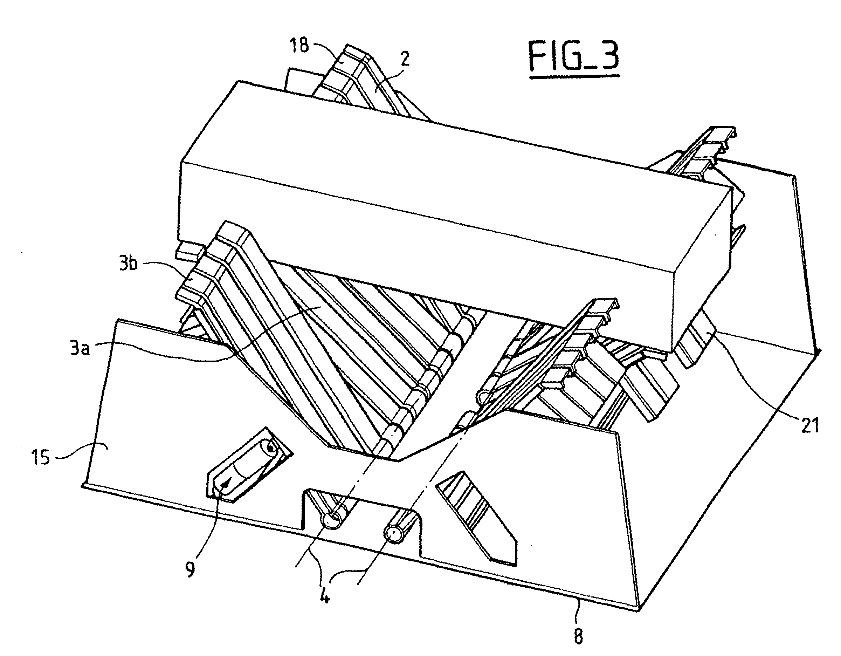

Ce dispositif peut aussi servir au calage transversal de pièces parallélépipédiques. Au chargement de ces pièces, les bras concernés s'abaissent sous l'effet du poids et la partie supérieure repliée des bras devient le plan de repos du chargement. Les bras restés en position haute servent au calage transversal. Un exemple du mode de réalisation est représenté figure 3.

Dans un autre mode de réalisation, le dispositif peut être adapté pour une faible hauteur d'encombrement, les bras ne servant plus au calage de pièces cylindriques, mais uniquement réservés au calage transversal de pièces parallélépipédiques.

## Revendications

1. Dispositif de calage automatique de pièces cylindriques (1) ou parallélépipédiques, notamment de rouleaux de tôle pour leur transport sur un support horizontal comportant deux faces d'appui (2) inclinées adaptées pour entrer en contact avec la surface de pièces dont l'axe est horizontal, au moins une des faces d'appui comprenant une rangée de bras (3) indépendants articulés autour d'axes horizontaux (4), chaque bras étant muni d'un moyen de rappel le maintenant en position haute en l'absence de rouleau, le bras s'abaissant lors du chargement de la pièce pour venir au contact d'une butée, la largeur des bras articulés étant telle par rapport à la largeur d'une pièce que la dite pièce reste adjacente à au moins un bras en position haute lors du transport, **caractérisé par le fait que** chaque bras comprend au moins une surface latérale verticale (3c) formant un moyen de butée empêchant le basculement de côté d'une pièce.

2. Dispositif selon la revendication 1, **caractérisé par le fait que** chaque bras comprend deux surfaces latérales supérieures parallèles.

3. Dispositif selon la revendication 1 ou 2, **caractérisé par le fait que** les bras sont articulés autour d'au moins un axe disposé à leurs extrémités inférieures.

4. Dispositif selon l'une quelconque des revendications précédentes, **caractérisé par le fait que** le moyen de rappel du bras est constitué par un ressort (9) disposé sous le bras.

5. Dispositif selon l'une quelconque des revendications précédentes, **caractérisé par le fait qu'**il comprend au moins une traverse (12) d'axe horizontal, de support des bras en position basse.

6. Dispositif selon l'une quelconque des revendications précédentes, **caractérisé par le fait que** chaque bras comprend un moyen de guidage entre la position haute et la position basse.

7. Dispositif selon la revendication 6, **caractérisé par le fait que** le moyen de guidage comprend au moins une portion de profilé métallique (20) s'étendant à partir d'une face inférieure du bras et perpendiculairement au dit bras.

8. Dispositif selon la revendication 7, **caractérisé par le fait qu'**il comprend des surfaces fixes (24) prévues pour entrer en contact avec la portion de guidage.

9. Dispositif selon l'une quelconque des revendications précédentes, **caractérisé par le fait que** chaque bras comprend une portion d'extrémité supérieure (18) repliée pour venir en contact avec une surface horizontale d'une traverse.

10. Wagon de marchandises comportant une pluralité de dispositifs selon l'une quelconque des revendications précédentes.

## Patentansprüche

1. Vorrichtung zum automatischen Festsetzen von zylindrischen (1) oder quaderförmigen Teilen, insbesondere von Blechrollen für deren Transport auf einem horizontalen Träger, mit zwei schrägen Auflageflächen (2), die dazu eingerichtet sind, mit der Oberfläche der eine horizontale Achse aufweisenden Teile in Berührung zu kommen, wobei wenigstens eine der Auflageflächen eine Reihe von unabhängig voneinander um horizontale Achsen (4) schwenkbaren Armen (3) aufweist, wobei jeder Arm mit einem ihn in Abwesenheit einer Rolle in einer angehobenen Stellung haltenden Rückstellmittel versehen ist, wobei der Arm sich bei Belastung mit dem Teil bis zur Anlage an einem Anschlag absenkt und wobei die Breite der schwenkbaren Arme in Bezug auf die Breite eines Teils derart ist, dass der genannte Teil während des Transportes neben zumindest einem in der angehobenen Stellung stehenden Arm verbleibt, **dadurch gekennzeichnet, dass** jeder Arm wenigstens eine vertikale seitliche Fläche (3c) aufweist, die ein Widerlagermittel bildet, das ein Kippen eines Teiles zur Seite verhindert.

2. Vorrichtung nach Anspruch 1, **dadurch gekennzeichnet, dass** jeder Arm zwei zueinander parallele hochstehende seitlichen Flächen aufweist.

3. Vorrichtung nach Anspruch 1 oder 2, **dadurch gekennzeichnet, dass** die Arme um wenigstens eine Achse schwenkbar gelagert sind, die an ihren inneren Enden angeordnet ist.

4. Vorrichtung nach einem beliebigen der vorhergehenden Ansprüche, **dadurch gekennzeichnet, dass** das Rückstellmittel für den Arm durch eine Feder (9) gebildet ist, die unter dem Arm angeordnet ist.

5. Vorrichtung nach einem beliebigen der vorhergehenden Ansprüche, **dadurch gekennzeichnet, dass** sie wenigstens eine eine horizontale Achse aufweisende Traverse (12) zur Stützung der Arme in einer abgesenkten Stellung aufweist.

6. Vorrichtung nach einem beliebigen der vorhergehenden Ansprüche, **dadurch gekennzeichnet, dass** jeder Arm ein Führungsmittel zur Führung zwischen der oberen Stellung und der abgesenkten Stellung aufweist.

7. Vorrichtung nach Anspruch 6, **dadurch gekennzeichnet, dass** das Führungsmittel wenigstens einen Abschnitt eines Metallprofils (20) aufweist, der von einer inneren Fläche des Armes weg ragt und senkrecht zu dem genannten Arm verläuft.

8. Vorrichtung nach Anspruch 7, **dadurch gekennzeichnet, dass** sie ortsfeste Flächen (24) aufweist, die dazu vorgesehen sind, um mit dem Führungsabschnitt in Berührung zu kommen.

9. Vorrichtung nach einem beliebigen der vorhergehenden Ansprüche, **dadurch gekennzeichnet, dass** jeder Arm einen oberen Endabschnitt (18) aufweist, der gebogen ist, um mit einer horizontalen Fläche einer Traverse in Berührung zu kommen.

10. Güterwagen, der eine Anzahl von Vorrichtungen nach einem beliebigen der vorhergehenden Ansprüche aufweist.

## Claims

1. Device for automatically securing cylindrical items (1) or parallelepipedal items, especially rolls of sheet metal for transporting them on a horizontal support comprising two inclined supporting faces (2) designed to come into contact with the surface of the items the axis of which is horizontal, at least one of the supporting faces comprising a row of independent arms (3) articulated about horizontal axles (4), each arm being equipped with a return means keeping it in the raised position when no roll is present, the arm lowering when the item is being loaded in order to come into contact with a stop, the width of the articulated arms with respect to the width of an item being such that the said item remains adjacent to at least one arm in the raised position during transport, **characterized in that** each arm comprises at least one vertical lateral surface (3c) forming a stop means preventing an item from tilting sideways.

2. Device according to Claim 1, **characterized in that** each arm comprises two parallel upper lateral surfaces.

3. Device according to either one of Claims 1 or 2, **characterized in that** the arms are articulated about at least one axis disposed at their lower ends.

4. Device according to any one of the preceding claims, **characterized in that** the return means of the arm consists of a spring (9) placed under the arm.

5. Device according to any one of the preceding claims, **characterized in that** it comprises at least one crossmember (12) of horizontal axis supporting the arms in the lowered position.

6. Device according to any one of the preceding claims, **characterized in that** each arm comprises a means of guidance between the raised position and the lowered position.

7. Device according to Claim 6, **characterized in that** the guidance means comprises at least one portion of metal section (20) extending from a lower face of the arm and perpendicular to the said arm.

8. Device according to Claim 7, **characterized in that** it comprises fixed surfaces (24) provided for making contact with the guidance portion.

9. Device according to any one of the preceding claims, **characterized in that** each arm comprises a top end portion (18) bent back to come into contact with a horizontal surface of a crossmember.

10. Goods wagon comprising a number of devices according to any one of the preceding claims.
